# EUROPEAN PATENT APPLICATION

(11) **EP 2 019 476 A2**
(43) Date of publication of application: **28.01.2009**
(21) Application number: 08252438.0
(22) Date of filing: 17.07.2008
(51) Int. Cl.: H02K 5/128

(54) **Electric motors**

(30) Priority: 17.07.2007 US 778994
(71) Applicant: TACO, INC., Cranston Rhode Island 02920 (US)
(72) Inventor: Mcnamara, Michael, Coventry, RI 02816 (US)
(74) Representative: Charig, Raymond Julian

(57) **Abstract**

Electric motors, for example wet rotor motors, include a rotor, a winding support, and a plurality of electrical windings surrounding the rotor. In some implementations, the winding support is a rotor housing, e.g., the can of a wet rotor motor. The windings define the stator of the motor.

## Description

### TECHNICAL FIELD

This invention relates to electric motors, for example motors used in wet rotor circulators.

### BACKGROUND

Many systems include either alternating current (AC) or direct current (DC) motors. Electric motors include an outer stator, and an inner rotor that is configured to rotate within the stator. Generally, the inner surface (inner diameter) of the stator and/or the outer surface (outer diameter) of the rotor has defined slots into which wire electrical windings can be positioned. These slots allow the electrical windings to be positioned with respect to the rotor so that the voltage applied to the windings will induce a magnetic field having a known, predetermined orientation. This electro-magnetic field induces the rotor, which may be made of iron with shorted conductive bars or permanent magnets, to turn. If the windings are positioned in slots on the outer surface of the rotor, the windings rotate with the rotor.

Due to difficulties with installing the windings into the slots on the inner surface of the stator, the inherent efficiency losses associated with increasing distance between the wire of the windings and the outer surface of the rotor, and other factors, efforts have been made to develop "slotless" motors. In such motors, the coils are usually pre-formed and then inserted into the iron lamination or "back iron" of the motor and positioned against its inner surface.

### SUMMARY

In one aspect, the invention features electric motors in which the electrical windings (coils) are positioned on an outer surface of a winding support. The rotor is disposed within the winding support, which may in some implementations be a chamber or "can," for example if the motor is a wet rotor motor. In the case of wet rotor motors, the can advantageously serves the dual purpose of supporting the winding and housing the rotor.

In other aspects, the windings are formed on a winding support that is configured to allow the windings to be directly adjacent the rotor, as will be discussed below.

In one aspect, the invention features a wet rotor motor that includes (a) a rotor housing defining an outer surface, (b) a rotor disposed within the housing and mounted for rotation relative to the housing, and (c) a stator defined by conductive windings positioned about the outer surface.

Some implementations include one or more of the following features. The outer surface of the housing may be cylindrical. The outer surface of the housing may include features about which the windings are formed. The conductive windings may overlap, and may be formed of, for example, copper or aluminum wire. The motor may optionally include iron rings surrounding an outer surface of the conductive windings. The motor may be a permanent magnet motor or, alternatively, an induction motor.

In another aspect, the invention features an electric motor including (a) a rotor, (b) a stator comprising conductive windings surrounding the rotor, the rotor being mounted for rotation relative to the windings, and (c) a winding support configured to allow the windings to be formed surrounding the rotor.

Some implementations of this aspect include one or more of the following features. The conductive windings may be positioned adjacent to the rotor. The winding support may comprise a cylinder. The winding support may further comprise support members extending radially from the cylinder. In some cases, each support member comprises a support wall extending generally perpendicular to the cylinder, and a retaining member extending generally parallel to the support wall. The winding support may comprise a pair of winding bobbins disposed at opposite ends of the rotor. The air gap between the rotor and windings is preferably less than 0.025 inch. Some implementations may also include the features discussed above.

The invention also features an electric motor including a rotor and a plurality of conductive windings surrounding the rotor and directly adjacent the rotor, the rotor being mounted for rotation relative to the windings and the conductive windings defining a stator.

The motor may further include a pair of winding supports, disposed at either end of the rotor, about which the windings are wound.

The invention also features methods of manufacturing motors and stators for motors.

In one aspect, the invention features a method of forming a stator for an electric motor. The method includes providing a winding support configured to allow wire to be wound to form a plurality of windings configured to surround a rotor and allow relative rotation of the rotor relative to the windings, and winding wire about the winding support to form the windings.

Some implementations include one or more of the following features. The method may also include placing a rotor between two portions of the winding support and winding the wire directly about the rotor. The winding support may comprise a rotor housing, which may be closed or partially open. The winding support may include a plurality of features about which the wire is wound. The winding support may comprise a cylindrical sleeve that is configured to be placed over a rotor. The sleeve may include a plurality of axially extending support members about which the wire is wound.

The details of one or more embodiments of the invention are set forth in the accompanying drawings and the description below. Other features and advantages of the invention will be apparent from the description and drawings, and from the claims.

### DESCRIPTION OF DRAWINGS

FIG. 1 is a perspective view of a wet rotor motor.
FIG. 1A is a cross-sectional view of the motor of FIG. 1.
FIG. 2 is a front plan view of a rotor/winding assembly.
FIG. 2A is an exploded view of the rotor/winding assembly of FIG. 2.
FIG. 3 is a top view of a winding support wound with a plurality of individual windings, e.g., for an induction motor.
FIG. 4 is a perspective view of the winding support shown in FIG. 3.

### DETAILED DESCRIPTION

There are a great many possible implementations of the invention, too many to describe herein. Some possible implementations that are presently preferred are described below. It cannot be emphasized too strongly, however, that these are descriptions of implementations of the invention, and not descriptions of the invention, which is not limited to the detailed implementations described in this section but is described in broader terms in the claims.

The electric motors described herein include a stator which is defined by a plurality of wire coils wound about an outer surface of a winding support. In some cases, the winding support is a continuous cylindrical surface, such as the outer surface of the housing of a wet rotor. In other cases, the winding support is discontinuous, for example the support may include only enough solid surfaces to allow winding to be performed.

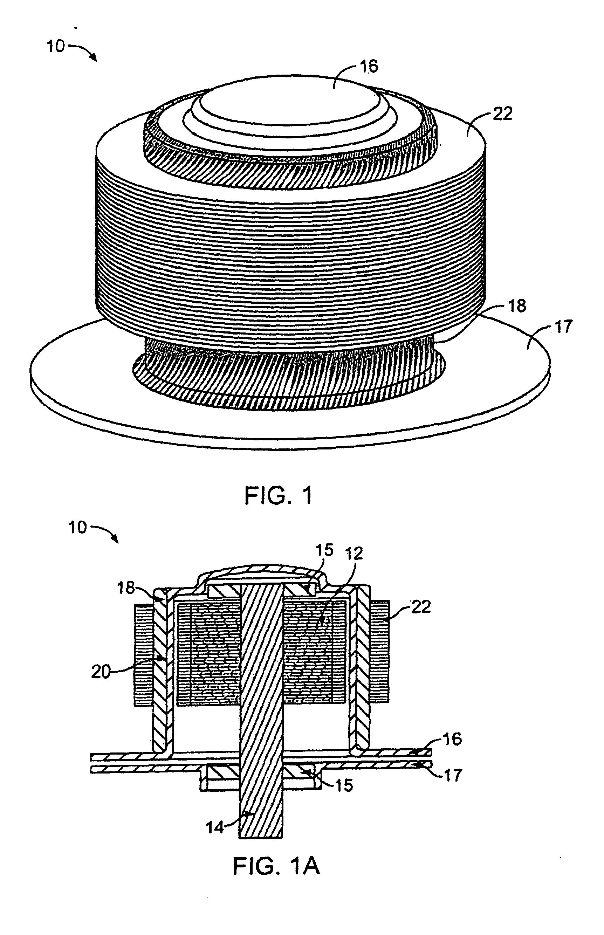

In one implementation, shown in FIGS. 1 and 1A, the windings are formed on an outer surface of the housing of a wet rotor. Referring to FIGS. 1 and 1A, a wet rotor motor 10 includes a rotor 12. The rotor may be, for example, a stack of iron laminations with shorted bars running parallel to its axis, or may be made up of magnets. Rotor 12 is mounted on a shaft 14, with bearings 15, for rotation within a "can." In the illustrated implementation, the can is defined by a rotor housing 16 and seal plate 17. However, if desired the can may have other configurations, for example it may include additional parts. The rotor housing 16 may be formed of any desired material, for example plastic or metal.

The stator of the motor is formed by windings 18, for example of wire or conductive traces, disposed on the outer surface 20 of the housing 16. Forming the stator directly on outer surface 20 minimizes the air gap between the stator and rotor, with typical air gap for this implementation being less than 0.100 inch, e.g., from about 0.050 to 0.070 inches, depending on the thickness of the housing used.

The windings of the motor form a net-like configuration in which the circumference of each winding lies generally on the outer surface 20 (the axis of each winding extends radially relative to the rotor) and the windings overlap each other closely. Such winding patterns are well known in the slotless motor art. Several techniques for forming this net-like arrangement will be described below, but the windings may be formed using other techniques. Advantageously, the winding supports and methods disclosed herein allow wide flexibility in the design of the winding pattern, as will be apparent from the description below.

The windings 18 may be formed using any suitable technique. The windings may be formed directly on the surface of the housing using a conventional bobbin winding device which loops the wire around structural features on the surface of the housing. For example, the outer surface of the housing may include pins, grooves, or slots (not shown), or any other structures about which the wire may be wound. Alternatively, the windings may be pre-formed using any desired method, and then the pre-formed network of windings may be wrapped around the housing.

Optionally, the windings 18 may be surrounded by back iron rings 22 as shown. The back iron improves the efficiency of the motor, as is well known.

In another implementation, the windings are formed between two winding supports, positioned at opposite ends of the rotor. This implementation may be used when the motor is a conventional motor rather than a wet rotor motor and thus there is no need for a can or housing around the rotor. Advantageously, in this implementation the windings can be positioned very close to the outer surface of the rotor, e.g., with an air gap of less than 0.025 inches, for example 0.010 to 0.025 inches, minimizing the air gap between the windings (stator) and the rotor.

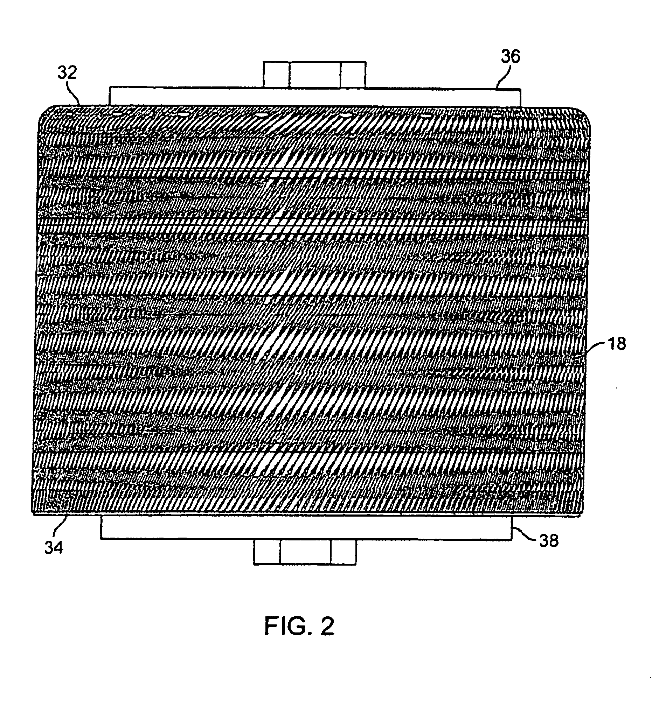

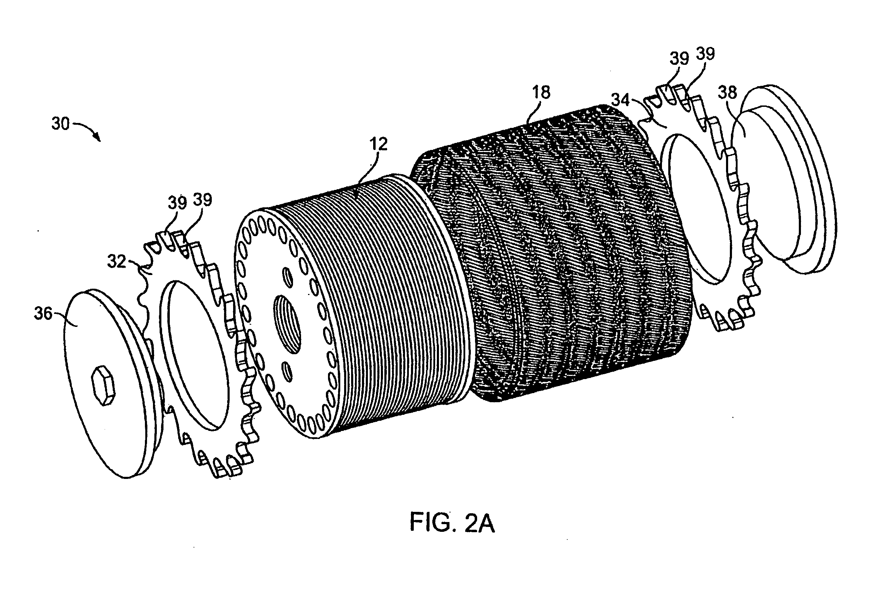

For example, FIG. 2 shows a motor 30 in which the copper wire has been wound from a top winding support bobbin 32 to a lower winding support bobbin 34 to form the windings 18. The components used for winding, as well as the windings 18 as they will look after they are wound onto the bobbins, are shown in exploded view in FIG. 2A. It is noted that the windings 18 are exploded from the bobbins for purposes of illustration, but generally cannot actually be separated from the bobbins once wound.

To form the windings, the rotor 12 is positioned between the bobbins 32 and 34, which are then positioned between the fixtures 36, 38, for example by threaded engagement of each fixture with the corresponding bobbin. Fixtures 36, 38 are then used to position the bobbins and rotor in a winding machine which holds the assembly together during the winding operation. The fixtures are constructed to allow the winding machine to rotate the bobbins in a predetermined manner during the winding operation. The winding machine is then used to form the windings 18 as illustrated in FIG. 2A. Once the winding operation is complete, the assembly is removed from the winding machine, and the fixtures are removed from the bobbins. At this point, the rotor can rotate freely within the windings 18. Generally, the fixtures are replaced by supports, and a shaft is inserted through the center of the bearing supports and rotor to complete the motor. As noted above, back iron may be placed over the windings if desired.

The bobbins illustrated in FIG. 2A include teeth 39 about which the wire is wound. These teeth could be replaced by many other types of winding support structures, for example tabs, hooks, slots, grooves, pins, pegs, differently shaped or sized teeth, or any other type of structure about which wire can be wrapped.

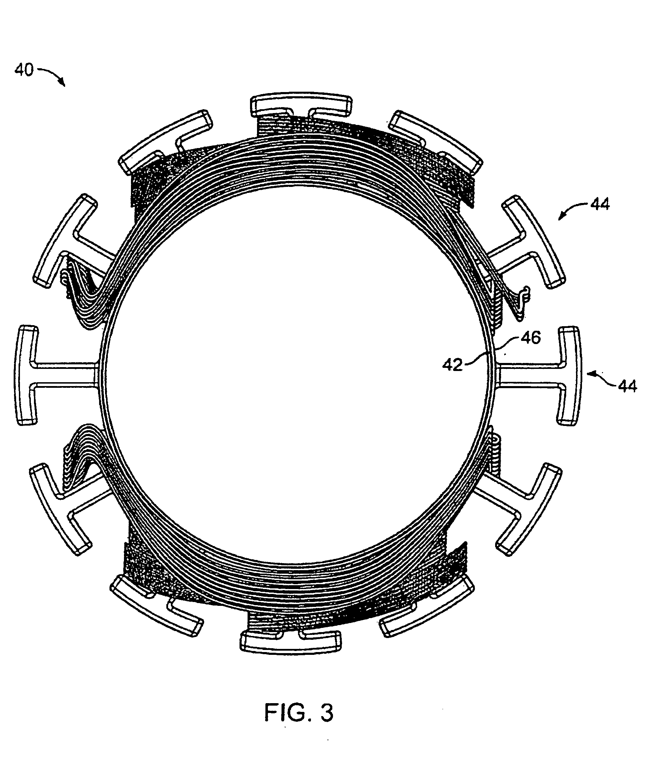

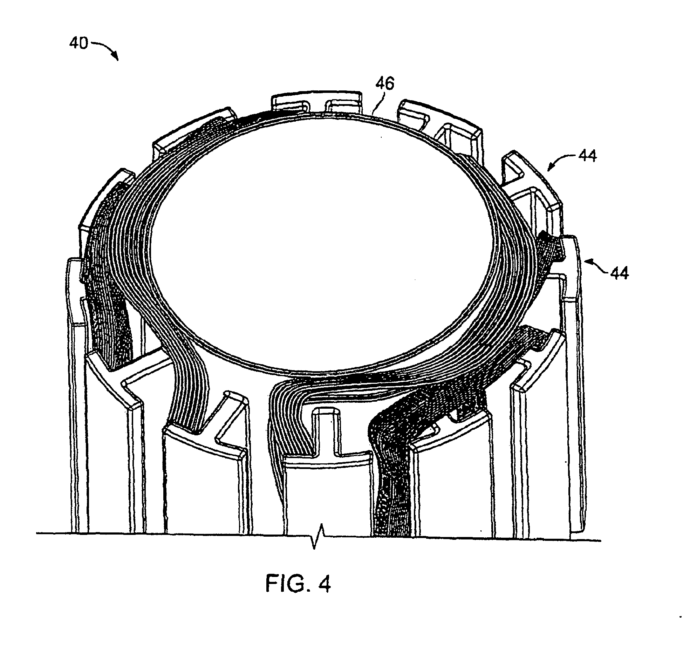

The techniques and winding supports described herein also apply to induction motors, in which individual windings are used rather than a network of windings. In this case, the windings could be formed on a winding support such as the one shown in FIGS. 3 and 4. Winding support 40 includes a cylindrical body 42 and a plurality of support members 44 extending radially from the outer surface 46 of the body 42. In the implementation shown in FIGS. 3 and 4, the support members 44 are T-shaped in cross section, each support member 44 including a support wall 48, extending radially from the outer surface 46, and a retaining member 50, extending generally perpendicular to the support wall and generally parallel to the outer surface 46. The windings are wrapped around the support wall and held in place by the retaining member, as shown in FIGS. 3 and 4. The support walls may be continuous, as shown, or may include open areas if it is important to reduce weight or material cost. The shape of the support members, as well as the number used and their spacing, can be selected to optimize the performance of a given motor as is well known in the electrical motor art. For example, the support members can be skewed or otherwise shaped to optimize the position of the coils relative to the rotor.

A number of embodiments of the invention have been described. Nevertheless, it will be understood that various modifications may be made without departing from the spirit and scope of the invention.

For example, while this would generally not be desired due to the increase in the gap between the rotor and stator, for a wet rotor motor the windings may be formed on a separate cylindrical form or other winding support and then positioned over the rotor housing.

Accordingly, other embodiments are within the scope of the following claims.

## Claims

1. A wet rotor motor comprising:
a rotor housing defining an outer surface,
a rotor disposed within the housing and mounted for rotation relative to the housing, and
a stator defined by conductive windings positioned about the outer surface.

2. The motor of claim 1 wherein the outer surface includes features about which the windings are formed.

3. An electric motor comprising:
a rotor,
a stator comprising conductive windings surrounding the rotor, the rotor being mounted for rotation relative to the windings, and
a winding support configured to allow the windings to be formed surrounding the rotor.

4. The motor of claim 3 wherein the conductive windings are positioned adjacent to the rotor.

5. The motor of claim 1 or claim 3 wherein the conductive windings overlap.

6. The motor of claim 1 or claim 3 further comprising iron rings surrounding an outer surface of the conductive windings.

7. The motor of claim 3 wherein the winding support comprises a cylinder.

8. The motor of claim 7 wherein the winding support further comprises support members extending radially from the cylinder.

9. The motor of claim 8 wherein each support member comprises a support wall extending generally perpendicular to the cylinder, and a retaining member extending generally parallel to the support wall.

10. The motor of claim 3 wherein the winding support comprises a pair of winding bobbins disposed at opposite ends of the rotor.

11. The motor of claim 3 wherein the air gap between the rotor and windings is less than 0.025 inch.

12. The motor of claim 1 or claim 3 wherein the motor comprises a permanent magnet motor.

13. The motor of claim 1 or claim 3 wherein the motor comprises an induction motor.

14. An electric motor comprising:
a rotor, and
a plurality of conductive windings surrounding the rotor and directly adjacent the rotor, the rotor being mounted for rotation relative to the windings and the conductive windings defining a stator.

15. The motor of claim 14 further comprising a pair of winding supports, disposed at either end of the rotor, about which the windings are wound.

16. A method of forming a stator for an electric motor, the method comprising:
providing a winding support configured to allow wire to be wound to form a plurality of windings configured to surround a rotor and allow relative rotation of the rotor relative to the windings; and
winding wire about the winding support to form the windings.

17. The method of claim 16 further comprising placing a rotor between portions of the winding support and winding the wire directly about the rotor.

18. The method of claim 16 wherein the winding support comprises a rotor housing.

19. The method of claim 16 wherein the winding support comprises a plurality of features about which the wire is wound.

20. The method of claim 16 wherein the winding support comprises a cylindrical sleeve that is configured to be placed over a rotor.

21. The method of claim 20 wherein the sleeve includes a plurality of axially extending support members about which the wire is wound.
